# EUROPÄISCHE PATENTSCHRIFT

(11) **EP 1 217 270 B1**
(45) Veröffentlichungstag und Bekanntmachung des Hinweises auf die Patenterteilung: **01.03.2006**
(21) Anmeldenummer: 01204867.4
(22) Anmeldetag: 12.12.2001
(51) Int. Cl.: F16K 1/44

(54) **Hubventil**
Poppet valve
Soupape

(30) Priorität: 22.12.2000 DE 10064782
(43) Veröffentlichungstag der Anmeldung: 26.06.2002
(73) Patentinhaber: Danfoss A/S, 6430 Nordborg (DK)
(72) Erfinder: Messmer, James David, 8000 Aarhus (DK); Sorensen, Soren Holm, 8464 Galten (DK)

(56) Entgegenhaltungen:
- DE-C- 19 839 955
- GB-A- 1 571 848
- US-A- 2 353 848
- US-A- 3 712 578
- PATENT ABSTRACTS OF JAPAN vol. 2000, no. 08, 6. Oktober 2000 (2000-10-06) & JP 2000 130608 A (AMERICAN STANDARD INC), 12. Mai 2000 (2000-05-12)

## Beschreibung

Die Erfindung betrifft ein Hubventil mit einem ersten Anschluß, einem zweiten Anschluß und dazwischen einer Absperreinrichtung mit einer Ventilsitzeinrichtung und einem mit dieser zusammenwirkenden Verschlußstück, wobei die Ventilsitzeinrichtung einen äußeren Ventilsitz und einen inneren Ventilsitz aufweist, die zu beiden Seiten eines zwischen den beiden Ventilsitzen angeordneten, zum Verschlußstück hin offenen, schmalen Verteilkanals angeordnet sind, der mit einem Anschluß in Verbindung steht und der innere Ventilsitz eine Öffnung umgibt, die über einen Anschlußkanal mit dem anderen Anschluß verbunden ist.

Ein derartiges Hubventil ist aus DE 198 39 955 C1 bekannt. Mit einem derartigem Hubventil erreicht man bereits mit relativ kleinen Hüben des Verschlußstücks gegenüber der Ventilsitzeinrichtung einen großen Durchfluß eines Mediums, das durch das Ventil gesteuert werden soll. Allerdings erfordert das bekannte Ventil eine spezielle Dichtungsanordnung am Verschlußstück.

Ein derartiges Ventil ist ausserdem aus US 2 353 848 bekannt. Das bekannte Ventil ist als Magnetventil ausgebildet. Es wird über das Schliesselement hinweg angeströmt, d.h. das durch das Ventil gesteuerte Fluid drückt das Schliesselement auf die Ventilsitze. Dabei wird das Schliesselement noch durch eine Feder in Anlage an den Ventilsitzen gehalten. Das Schliesselement ist relativ gross. Es steht radial über den äusseren Ventilsitz über. Die Öffnung erfolgt über die Beaufschlagung einer elektromagnetischen Spule mit Strom.

US 3 712 578 zeigt ein Ventil mit einem Ventilsitz und einem Ventilkegel bestehend aus einer Membran, wobei die Membran zwischen zwei Ventilgehäuseteilen angeordnet ist.

GB 1 571 848 zeigt eine Ventilkonstruktion, in der der Ventilkegel auch gegen das umliegende Ventilgehäuse schliesst/abdichtet, so dass hier eine Ventilkonstruktion mit nur einem Ventilsitz entsteht.

Der Erfindung liegt die Aufgabe zugrunde, ein Hubventil zu schaffen, das einen größeren Mediendurchfluß erlaubt, aber einfach aufgebaut ist.

Diese Aufgabe wird bei einem Hubventil der eingangs genannten Art dadurch gelöst, dass das Verschlußstück einen Außendurchmesser aufweist, der kleiner als der Außendurchmesser des äußeren Ventilsitzes, aber größer als der innere Durchmesser des äußeren Ventilsitzes ist.

Wenn man davon ausgeht, daß das Gehäuse des Ventils in dem Abschnitt, in dem der Gehäuseeinsatz angeordnet ist, als Rohr ausgebildet ist, dann steht zwischen dem Verschlußstück und der Innenwand des Rohres noch ein kleiner Raum zur Verfügung, durch den das Medium abfließen kann. Außerdem kann das Verschlußteil ohne Berührung der Gehäuseinnenwand bewegt werden.

Vorzugsweise weist das Verschlußstück keine Öffnungen, Durchbrechungen oder dergleichen auf. Damit bekommt das Verschlußstück zum einen einen relativ einfachen Aufbau, zum anderen auch eine relativ große Stabilität. Insbesondere bei geöffnetem Ventil ist die Schwingungsneigung des Verschlußstücks dabei herabgesetzt.

Bevorzugterweise ist das Verschlußstück auf seiner mit der Ventilsitzanordnung zusammenwirkenden Fläche plan ausgebildet. Dies vereinfacht die Herstellung. Gleichzeitig wird eine gut zu kontrollierende Dichtfläche bereitgestellt. Die Bearbeitung der Ventilsitzanordnung wird ebenfalls vereinfacht. Beide Ventilsitze können in einer Ebene liegen. Dies ist die Ebene, in der die Dichtfläche des Verschlußstücks liegt.

Vorzugsweise steht ein Befestigungselement, mit dem eine Dichtung an einem Stößel des Verschlußstücks befestigt ist, über die Dichtung vor und ragt im geschlossenen Zustand in die Öffnung hinein. Mit dieser Ausgestaltung wird erreicht, daß ein Medienstrom, der aus dem schmalen Kanal austritt und über den inneren Ventilsitz abfließt, in die Öffnung hinein gerichtet wird. Dies verbessert das Strömungsverhalten.

Bevorzugterweise ist die Ventilsitzeinrichtung an einem Gehäuseeinsatz aus Kunststoff angeordnet. Ein derartiger Gehäuseeinsatz läßt sich einfach herstellen und bearbeiten. Darüber hinaus läßt sich mit einem Kunststoffeinsatz eine gut abdichtende Ventilsitzeinrichtung bereitstellen.

Vorzugsweise ist der Anschlußkanal seitlich aus dem Gehäuseeinsatz herausgeführt. Damit steht eine kollisionsfreie Führung von Zufluß und Abfluß aus dem Gehäuseeinsatz zur Verfügung.

Bevorzugterweise weist der Gehäuseeinsatz einen umlaufenden Vorsprung auf, der entgegen der Schließrichtung des Verschlußstücks an einer Schulter eines Gehäuses anliegt, wobei das Gehäuse auf der gegenüberliegenden Seite des Vorsprungs umgeformt ist. Das Umformen kann beispielsweise durch Bördeln erfolgen. Damit ist der Kunststoffeinsatz zuverlässig und ausreichend fest im Gehäuse befestigt.

Bevorzugterweise ist der Vorsprung durch eine Mündung des Anschlußkanals unterbrochen. Damit erreicht man eine größere Flexibilität bei der Führung des Medienstromes. Das Medium kann sowohl oberhalb als auch unterhalb des Vorsprungs und damit oberhalb oder unterhalb einer Befestigung im Gehäuse aus dem Gehäuseeinsatz austreten.

Die Erfindung wird im folgenden anhand eines bevorzugten Ausführungsbeispiels in Verbindung mit der Zeichnung näher beschrieben. Hierin zeigen:
- Fig. 1: einen schematischen Längsschnitt durch ein Hubventil und

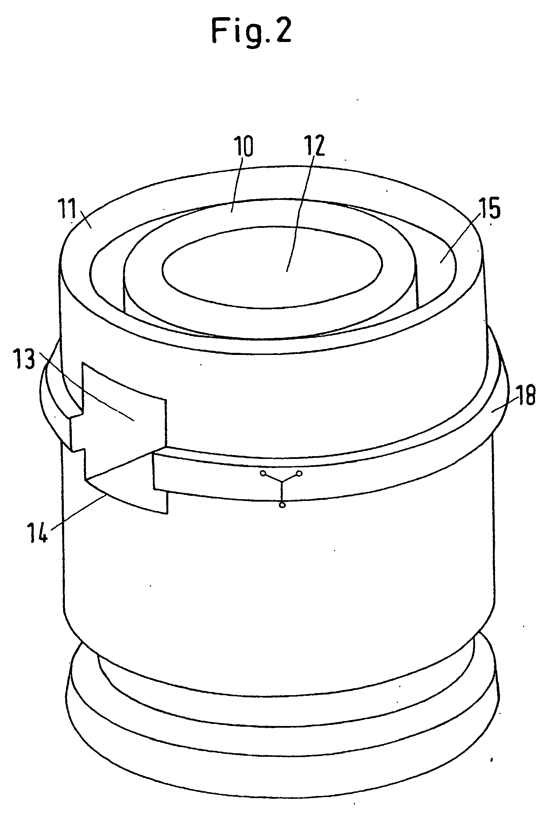

- Fig. 2: eine perspektivische Darstellung eines Gehäuseeinsatzes.

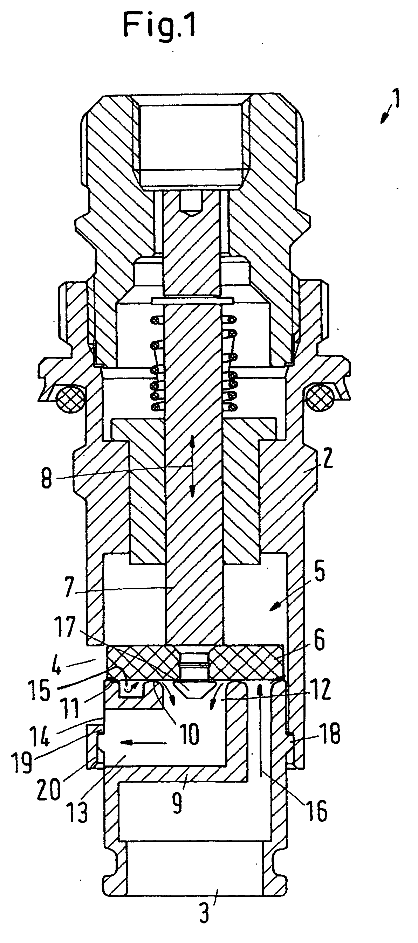

Fig. 1 zeigt ein Hubventil 1 mit einem Gehäuse 2 , das einen Eingangsanschluß 3 und einen Ausgangsanschluß 4 aufweist. Zwischen dem Eingangsanschluß 3 und dem Ausgangsanschluß 4 ist eine Absperreinrichtung 5 angeordnet, die ein Verschlußstück 6 aufweist. Das Verschlußstück 6 ist aus einem Kunststoff gebildet, der in begrenztem Umfang nachgiebig ist. Das Verschlußstück 6 bildet also gleichzeitig eine Dichtung. Das Verschlußstück 6 ist an einem Stößel 7 befestigt, der im Gehäuse 2 in Richtung eines Doppelpfeils 8 verschiebbar ist.

Das Verschlußstück 6 wirkt zusammen mit einer Ventilsitzanordnung, die an einem Gehäuseeinsatz 9 ausgebildet ist. Die Ventilsitzanordnung weist einen inneren Ventilsitz 10 und einen äußeren Ventilsitz 11 auf. Beide Ventilsitze 10, 11 sind kreislinienförmig ausgebildet. Dies ist jedoch nicht zwingend. Auch andere Formen sind möglich. Die beiden Ventilsitze 10,11 sind auf ihrer dem Verschlußstück 6 zugewandten Seite abgerundet, wobei die beiden Ventilsitze 10, 11 aber in der gleichen Ebene liegen, so daß die ebene oder plane Unterseite des Verschlußstücks 6 an beiden Ventilsitzen 10, 11 gleichzeitig zur Anlage kommt, wenn der Stößel 7 auf den Gehäuseeinsatz 9 zubewegt wird.

Der innere Ventilsitz 10 umschließt eine Öffnung 12, die über einen Anschlußkanal 13 mit einer Mündung 14 in Verbindung steht, die seitlich am Gehäuseeinsatz 9 angeordnet ist. Die Mündung 14 steht mit dem Ausgangsanschluß 4 in Verbindung. Die Darstellung in Fig. 1 ist nicht maßstäblich, d.h. die Größe der Mündung 14 kann der Größe der Öffnung 12 entsprechen. Es ist auch nicht erforderlich, daß der Anschlußkanal rechtwinklig zur Öffnung 12 verläuft.

Der Eingangsanschluß 3 steht in Verbindung mit einem schmalen, zum Verschlußstück 6 hin offenen Verteilkanal 15, wobei zwischen dem Verteilkanal 15 und dem Eingangsanschluß 3 im Gehäuseeinsatz 9 eine Bohrung 16 vorgesehen ist. Der Durchgang 16 kann als Bohrung ausgebildet sein. Er kann jedoch beim Gießen des Gehäuseeinsatzes 9 gleich mit erzeugt werden, was vor allem dann zweckmäßig ist, wenn der Gehäuseeinsatz aus Kunststoff besteht.

Wenn nun das Verschlußstück 6 von den beiden Ventilsitzen 10,11 abgehoben wird, dann kann ein durch den Eingangsanschluß 3 zuströmendes Medium über den äußeren Ventilsitz 11 nach außen abfließen, aber auch über den inneren Ventilsitz 10 in die Öffnung 12.

Zur Befestigung des Verschlußstücks 6 am Stößel 7 ist ein Befestigungselement 17 vorgesehen, daß in Richtung auf den Gehäuseeinsatz 9 aus dem Verschlußstück 6 vorsteht und dann, wenn das Verschlußstück 6 an den beiden Ventilsitzen 10, 11 anliegt, in die Öffnung 12 hinein ragt. Das Befestigungselement 17 kann einstückig mit dem Stößel 7 ausgebildet sein. Es kann sich aber auch un ein getrenntes Teil, beispielsweise eine Schraube, handeln, das in dem Stößel 7 befestigt wird.

Dieses Befestigungselement 17, das noch einen kegelstumpfartigen Kopf aufweisen kann, dient dann unter anderem dazu, das über den inneren Ventilsitz 10 strömende Medium in die Öffnung 12 hinein zu leiten, was die Strömungsverhältnisse verbessert.

Der Gehäuseeinsatz 9 weist einen umlaufenden Vorsprung 18 auf, der an einer Schulter 19 des Gehäuses 2 anliegt. Auf der gegenüberliegenden Seite weist das Gehäuse 2 einen Bördelrand 20 auf, der in Figur 1 noch nicht umgebogen ist. Wenn der Bördelrand 20 umgebogen ist, dann ist der Gehäuseeinsatz 9 fest und zuverlässig im Gehäuse 2 gehalten.

Das Verschlußstück 6 weist einen Durchmesser auf, der etwas kleiner als der Außenduchmesser des äußeren Ventilsitzes 11, aber etwas größer als der Innendurchmesser des äußeren Ventilsitzes 11 ist. Damit kann das Gehäuse 2 den Gehäuseeinsatz 9 rohrförmig umgeben, wobei dieses Rohr dann verlängert ist. Trotzdem ist das Verschlußstück 6 in diesem rohrförmigen Abschnitt des Gehäuses 2 frei beweglich, dichtet gegenüber dem äußeren Ventilsitz 11 ab und gestattet, wenn es vom Ventilsitz 11 abgehoben ist, einen Medienstrom zwischen dem Gehäuse 2 und dem Verschlußstück 6. Ansonsten kann das Medium aber bei geöffneten Ventil mehr oder weniger ungehindert aus dem Kanal 15 zum Ausgangsanschluß 4 strömen, und zwar sowohl auf der dem Verschlußstück 6 zugewandten Seite des Gehäuseeinsatzes 9 als auch durch den Anschlußkanal 13. Damit wird ein relativ großer Strömungsquerschnitt für das Medium bereitgestellt.

Abgesehen von der Ausbildung des Gehäuseeinsatzes 9 kann das Hubventil wie ein herkömmliches Hubventil ausgebildet werden, d.h. mit einem relativ einfach aufgebauten Verschlußstück 6.

Der Kanal 15 ist durch eine Nut oder einen Schlitz gebildet. Das Verhältnis der Länge des äußeren Ventilsitzes 11 zum Abstand des äußeren Ventilsitzes 11 vom inneren Ventilsitz 10 sollte dabei mindestens etwa 35 betragen.

Von der dargestellten Ausführungsform kann in vielerlei Hinsicht abgewichen werden. Beispielsweise kann man, wie dies aus DE 198 39 955 A1 bekannt ist, Durchbrechungen im Verschlußstück 6 vorsehen, so daß dann insgesamt drei Wege für die Flüssigkeit zur Verfügung stehen. Auch können die beiden Ventilsitze 10, 11 in unterschiedlichen Ebenen angeordnet werden, wenn das Verschlußstück 6 entsprechend ausgebildet wird. Beides ist relativ leicht dann möglich, wenn der Gehäuseeinsatz 9 und gegebenenfalls auch das Verschlußstück 6 aus Gießteilen ausgebildet sind.

## Patentansprüche

1. Hubventil mit einem ersten Anschluß (3), einem zweiten Anschluß (4) und dazwischen einer Absperreinrichtung (5) mit einer Ventilsitzeinrichtung (10, 11) und einem mit dieser zusammenwirkenden Verschlußstück (6), wobei die Ventilsitzeinrichtung (10, 11) einen äußeren Ventilsitz (11) und einen inneren Ventilsitz (10) aufweist, die zu beiden Seiten eines zwischen den beiden Ventilsitzen (11, 10) angeordneten, zum Verschlußstück hin offenen, schmalen Verteilkanals (15) angeordnet sind, der mit einem Anschluß (3) in Verbindung steht und der innere Ventilsitz (10) eine Öffnung (12) umgibt, die über einen Anschlußkanal (13) mit dem anderen Anschluß (4) verbunden ist, **dadurch gekennzeichnet, dass** das Verschlußstück (6) einen Außendurchmesser aufweist, der kleiner als der Außendurchmesser des äußeren Ventilsitzes (11), aber größer als der innere Durchmesser des äußeren Ventilsitzes (11) ist.

2. Hubventil nach Anspruch 1, **dadurch gekennzeichnet, daß** das Verschlußstück (6) keine Öffnungen, Durchbrechungen oder dergleichen aufweist.

3. Hubventil nach Anspruch 1 oder 2, **dadurch gekennzeichnet, daß** das Verschlußstück (6) auf seiner mit der Ventilsitzanordnung (10, 11) zusammenwirkenden Fläche plan ausgebildet ist.

4. Hubventil nach einem der Ansprüche 1 bis 3, **dadurch gekennzeichnet, daß** ein Befestigungselement (17), mit dem eine Dichtung an einem Stößel (7) des Verschlußstücks (6) befestigt ist, über die Dichtung vorsteht und im geschlossenen Zustand in die Öffnung (12) hineinragt.

5. Hubventil nach einem der Ansprüche 1 bis 4, **dadurch gekennzeichnet, daß** die Ventilsitzeinrichtung (10,11) an einem Gehäuseeinsatz (9) aus Kunststoff angeordnet ist.

6. Hubventil nach Anspruch 5, **dadurch gekennzeichnet, daß** der Anschlußkanal (13) seitlich aus dem Gehäuseeinsatz (9) herausgeführt ist.

7. Hubventil nach Anspruch 5 oder 6, **dadurch gekennzeichnet, daß** der Gehäuseeinsatz (9) einen umlaufenden Vorsprung (18) aufweist, der entgegen der Schließrichtung des Verschlußstücks (6) an einer Schulter (19) eines Gehäuses anliegt, wobei das Gehäuse (2) auf der gegenüberliegenden Seite des Vorsprungs (18) umgeformt ist.

8. Hubventil nach Anspruch 7, **dadurch gekennzeichnet, daß** der Vorsprung (18) durch eine Mündung (14) des Anschlußkanals (13) unterbrochen ist.

## Claims

1. Lifting valve with a first connection (3), a second connection (4) and there between a blocking device (5) with a valve seat arrangement (10, 11) and a closing member (6) cooperating with said valve seat arrangement (10, 11), the valve seat arrangement (10, 11) having an outer valve seat (11) and an inner valve seat (10), which are arranged on either side of a narrow distribution channel (15) located between the two valve seats (11, 10) and opening in the direction of the closing member, the distribution channel being connected with a connection (3), the inner valve seat (10) surrounding an opening (12), which is connected with the second connection (4) via a connecting channel (13), **characterised in that** the closing member (6) has an outer diameter, which is smaller than the outer diameter of the outer valve seat (11), but larger than the inner diameter of the outer valve seat (11).

2. Lifting valve according to claim 1, **characterised in that** the closing member (6) has no openings, passages or the like.

3. Lifting valve according to claim 1 or 2, **characterised in that** the face of the closing member (6) cooperating with the valve seat arrangement (10, 11) is flat.

4. Lifting valve according to one of the claims 1 to 3, **characterised in that** a fixing element (17), with which a sealing is fixed on a tappet (7) of the closing member (6), projects over the sealing and, in the closed state, extends into the opening (12).

5. Lifting valve according to one of the claims 1 to 4, **characterised in that** the valve seat arrangement (10, 11) is arranged on a housing insert (9) made of plastic.

6. Lifting valve according to claim 5, **characterised in that** the connecting channel (13) is led out through the side of the housing insert (9).

7. Lifting valve according to claim 5 or 6, **characterised in that** the housing insert (9) has a circumferential projection (18), which bears on a shoulder (19) of a housing against the closing direction of the closing member (6), the housing (2) being bent over the opposite side of the projection (18).

8. Lifting valve according to claim 7, **characterised in that** the projection (18) is interrupted by an opening (14) of the connecting channel (13).

## Revendications

1. Soupape à levée rectiligne dotée d'un premier raccordement (3), d'un second raccordement (4) et entre ceux-ci d'un système de blocage (5) doté d'un système de siège de soupape (10, 11) et d'un élément de fermeture (6) coopérant avec celui-ci, le système de siège de soupape (10, 11) comprenant un siège de soupape extérieur (11) et un siège de soupape intérieur (10), qui sont disposés de part et d'autre d'un canal de distribution (15) étroit, ouvert en direction de l'élément de fermeture, disposé entre les deux sièges de soupape, lequel canal est relié à un raccordement (3) et le siège de soupape interne (10) entoure une ouverture (12), qui est reliée par un canal de raccordement (13) à l'autre raccordement (4), **caractérisée en ce que** l'élément de fermeture (6) comprend un diamètre extérieur, qui est plus petit que le diamètre extérieur du siège de soupape extérieur (11) mais plus grand que le diamètre intérieur du siège de soupape extérieur (11).

2. Soupape à levée rectiligne selon la revendication 1, **caractérisée en ce que** l'élément de fermeture (6) ne comprend aucune ouverture, percée ou similaire.

3. Soupape à levée rectiligne selon la revendication 1 ou 2, **caractérisée en ce que** l'élément de fermeture (6) est conçu de façon plane sur sa surface coopérant avec le système de siège de soupape (10, 11).

4. Soupape à levée rectiligne selon l'une quelconque des revendications 1 à 3, **caractérisée en ce qu'**un élément de fixation (17), avec lequel un joint est fixé à un piston (7) de l'élément de fermeture (6), dépasse du joint et fait saillie à l'état fermé à l'intérieur de l'ouverture (12).

5. Soupape à levée rectiligne selon l'une quelconque des revendications 1 à 4, **caractérisée en ce que** le système de siège de soupape (10, 11) est disposé sur un revêtement de boîtier (9) en matière plastique.

6. Soupape à levée rectiligne selon la revendication 5, **caractérisée en ce que** le canal de raccordement (13) est guidé latéralement à l'extérieur du revêtement de boîtier (9).

7. Soupape à levée rectiligne selon la revendication 5 ou 6, **caractérisée en ce que** le revêtement de boîtier (9) comprend une saillie circulaire (18), qui, dans le sens inverse de la direction de fermeture de l'élément de fermeture (6), est adjacente à un épaulement (19) d'un boîtier, le boîtier (2) étant formé sur le côté opposé de la saillie (18).

8. Soupape à levée rectiligne selon la revendication 7, **caractérisée en ce que** la saillie (18) est interrompue par une embouchure (14) du canal de raccordement (13).
